# EUROPÄISCHE PATENTSCHRIFT

(11) **EP 1 676 039 B1**
(45) Veröffentlichungstag und Bekanntmachung des Hinweises auf die Patenterteilung: **14.12.2011**
(21) Anmeldenummer: 04790380.2
(22) Anmeldetag: 14.10.2004
(51) Int. Cl.: F16C 23/08, F16C 35/04, F16C 35/077, B60K 17/24

(54) **RADIALLAGERUNG FÜR EINE ANTRIEBSWELLE VON FAHRZEUGEN**
RADIAL BEARING FOR A DRIVE SHAFT OF A VEHICLE
PALIER RADIAL POUR ARBRE D'ENTRAINEMENT DE VEHICULES

(30) Priorität: 24.10.2003 DE 10349783
(43) Veröffentlichungstag der Anmeldung: 05.07.2006
(73) Patentinhaber: Schaeffler Technologies GmbH & Co. KG, 91074 Herzogenaurach (DE)
(72) Erfinder: OLSZEWSKI, Piotr, F-67500 Haguenau (FR); SCHNEIDER, Francis, F-67360 Walbourg (FR); BERNHARDT, Rémy, 67500 Haguenan (FR)
(86) Internationale Anmeldenummer: PCT/EP2004/011515
(87) Internationale Veröffentlichungsnummer: WO 2005/042992

(56) Entgegenhaltungen:
- AT-B- 100 877
- DE-A1- 2 927 447
- DE-A1- 3 102 558
- DE-A1- 19 618 798
- DE-A1- 19 645 530
- GB-A- 2 276 214
- US-A- 2 062 290
- US-A- 2 794 691
- US-A- 4 648 475

## Beschreibung

### Anwendungsgebiet der Erfindung

Die Erfindung betrifft eine Radiallagerung für eine Antriebswelle von Fahrzeugen, insbesondere für eine Antriebshalbwelle, die ein an einer quer eingebauten Brennkraftmaschine angeflanschtes Getriebe mit einem angetriebenen Vorderrad verbindet, wobei die Antriebshalbwelle über ein abgedichtetes Radiallager von einem Halteelement aufgenommen ist, das an einem Gehäuse befestigt ist und wobei zur Selbstausrichtung des Radiallagers dessen Außenring eine sphärisch gestaltete Mantelfläche aufweist.

### Hintergrund der Erfindung

Eine derart ausgebildete Radiallagerung ist aus der DE 196 18 798 A1 vorbekannt. Ein abgedichtetes Rillenkugellager, dessen Außenring eine kugelige Mantelfläche aufweist, ist von einem Halteelement in Form eines Flansches aufgenommen, wobei dieses Halteelement wiederum an einem Gehäuse befestigt ist und so die Antriebswelle abstützt. Das Haltelement ist mit einer ebenfalls kugeligen Aufnahmebohrung versehen, so dass bei Montage der Antriebswelle das Lager im Halteelement um seine Achse um einen bestimmten Teilbetrag verschwenkbar ist, so dass eine begrenzte Ausrichtung des Radiallagers möglich ist. Das Halteelement für die Aufnahme des Radiallagers ist aus zwei spanlos geformten Halbschalen gebildet, die formschlüssig miteinander verbunden sind, wobei beide Halbschalen mit einer kugeligen inneren Aufnahmefläche versehen sind.

Nachteilig dabei ist, dass ein derart gestaltetes Halteelement einen aufwendigen Herstellungsprozeß erfordert. Zum einen muß jede Halbschale in aufwendiger Weise durch einen spanlosen Formgebungsprozeß separat hergestellt werden und zum anderen müssen beide Halbschalenelemente miteinander verbunden werden.

DE 31 02 558 A zeigt eine Radiallagerung der gattungsbildenden Art mit einem Radiallager, das zur Selbstausrichtung an seinem Außenring eine sphärisch gestaltete Mantelfläche aufweist. Zwischen dem Radiallager und einer Aufnahmeplatte des Radiallagers ist eine geschlitzte Hülse, zum Beispiel aus Polyamid, Polyurethan oder Tetrafluoräthylen, angeordnet. Die Hülse weist eine zur sphärisch gestalteten Mantelfläche des Außenringes korrespondierende, entgegengesetzt sphärische Aufnahmebohrung auf. Die Formgebung der Mantelfläche der Hülse ist so gewählt, dass sie in eine entsprechende, gegebenenfalls zylindrisch oder konisch ausgebildete Aufnahmebohrung der Aufnahmeplatte eingesetzt werden kann.

### Zusammenfassung der Erfindung

Aufgabe der Erfindung ist eine Radiallagerung für eine Antriebswelle von Fahrzeugen, die einen Ausgleich von Ausrichtungsfehlern der Welle ermöglicht, aber einfacher zu montieren ist.

Erfindungsgemäß wird diese Aufgabe nach dem kennzeichnenden Teil von Anspruch 1 in Verbindung mit dessen Oberbegriff dadurch gelöst, dass die Aufnahmebohrung der Kunststoffhülse mit mehreren gleichmäßig in Umfangsrichtung voneinander beabstandeten Ausnehmungen versehen ist, die sich in etwa bis in deren axiale Mitte erstrecken, wobei einander benachbarte Ausnehmungen ihren Ursprung wechselweise von einem der beiden axialen Enden nehmen.

Die sphärische Mantelfläche des Außenringes und die dazu gehörige sphärische Aufnahmebohrung der Kunststoffhülse erlauben, wie bereits aus dem Stand der Technik bekannt, bei der Montage eine Ausrichtung des Radiallagers im Halteelement, so dass eine spannungsfreie Radiallagerung mit ihren ebenfalls bekannten vorteilhaften Auswirkungen sichergestellt ist. Durch die ebenfalls an sich bekannte Kunststoffhülse wird diese Selbstausrichtung kostengünstig möglich, da die dem jeweiligen Anwendungsfall angepassten Kunststoffhülsen in mannigfaltigen Formen durch ein Spritzgießverfahren in einfacher Weise herstellbar sind. Hinzu kommt, dass eine solche Hülse aufgrund ihrer elastischen Eigenschaften dämpfend wirkt, so dass vorhandene Schwingungen, die sich negativ auf das Geräuschverhalten auswirken, eliminiert werden können. Durch eine derartige Radiallagerung der Antriebswelle wird somit kein den Fahrkomfort nachteilig beeinflussender Körperschall in den Fahrgastraum des Fahrzeuges übertragen. Es ist weiter von Vorteil, dass die aus Radiallager, Kunststoffhülse und Halteelement bestehende Baueinheit aufgrund der Elastizität der Hülse problemlos ineinander gefügt werden kann, das heißt, einfach montierbar ist. Durch die Ausnehmungen wird bei der Arretierung des Lagers die auf den Lageraußenring wirkende Kraft verringert. Auch wirkt sich der unverlierbare Zusammenhalt der kompletten Baueinheit verteilhaft aus, da diese in bereits vormontierten Zustand an den Endverbraucher geliefert werden kann.

Vorteilhafte Ausführungen der Erfindung sind in den Unteransprüchen 2 und 3 beschrieben.

So ist nach Anspruch 2 vorgesehen, dass das Halteelement als ein Flansch ausgebildet ist, dessen senkrecht zu einer Achse des Radiallagers verlaufender Teil mit Befestigungsmitteln versehen ist. Im Sinne der Erfindung ist unter Flansch letztendlich eine beliebig geformte Platte mit Befestigungsmitteln zu verstehen, die das Halten der Radiallagerung an einer Anschlusskonstruktion ermöglicht. Beispielsweise kann diese Platte mit einfachen Schraublöchern versehen sein, durch die Befestigungsschrauben hindurchgeführt sind. Auch ist es möglich, das Halteelement mit Durchbrüchen in Form von Langlöchern auszugestalten, so daß beim Verschrauben an einer Anschlusskonstruktion ein durch Fertigungstoleranzen bedingter Ausgleich möglich ist.

Nach einem anderen Merkmal gemäß Anspruch 3 soll die Kunststoffhülse an einem axialen Ende mit mehreren gleichmäßig in Umfangsrichtung voneinander beabstandeten Haltenasen versehen sein, die das Halteelement radial überdecken. Auf diese Weise ist eine verliersichere Baueinheit gebildet, die als Komplettbauteil zum Kunden geliefert und von diesem nur fachgemäß montiert zu werden braucht.

Die Erfindung wird an nachstehenden Ausführungsbeispielen näher erläutert.

### Kurze Beschreibung der Zeichnungen

Es zeigen:
- Figur 1: einen schematischen Aufbau einer bekannten Antriebsanordnung einer Brennkraftmaschine mit einer Antriebswelle,
- Figur 2: eine Seitenansicht einer erfindungsgemäßen Lageranordnung,
- Figur 3: einen Schnitt entlang der Linie III - III in Figur 2,
- Figur 3a: eine vergrößerte Darstellung einer erfindungsgemäßen Lageranordnung,
- Figur 4: eine perspektivische Darstellung eines erfindungsgemäßen Halteelements
- Figur 5: eine perspektivische Darstellung einer erfindungsgemäßen Kunststoffhülse und
- Figur 6: einen Längsschnit durch die erfindungsgemäße Lageranordnunge.

### Ausführliche Beschreibung der Zeichnungen

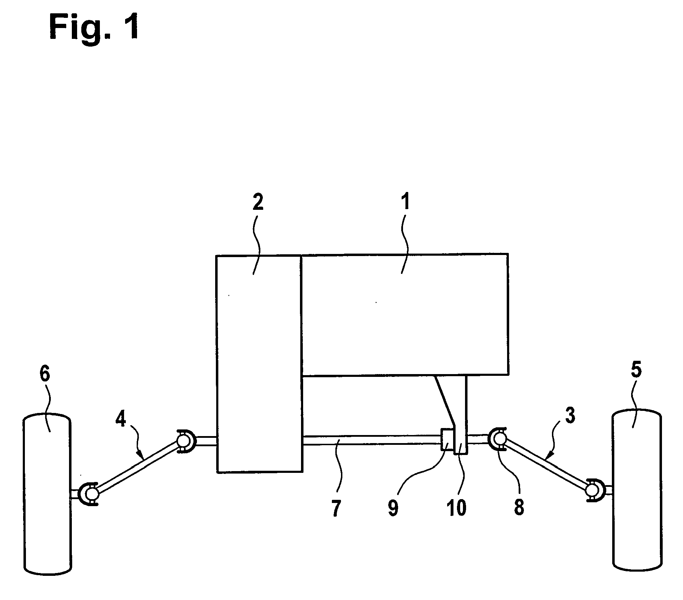

In Figur 1 ist der Aufbau einer bekannten Antriebsordnung für ein vorderachsangetriebenes Fahrzeug in einer schematischen Darstellung gezeigt. Mit dem Bezugszeichen 1 ist dabei eine im Fahrzeug quer eingebaute Brennkraftmaschine bezeichnet, die mit einem Getriebe 2 eine Einheit bildet. Das Getriebe 2 ist jeweils über eine Kardanwelle 3, 4 mit angetriebenen Vorderrädern 5, 6 verbunden. Die Kardanwelle 3 ist über ein Kardangelenk 8 mit einer Antriebshalbwelle 7 verbunden, die wiederum über ein Radiallager 9, welches in einem Halteelement 10 angeordnet ist, abgestützt ist. Die Radiallagerung 9 ist nun in erfindungsgemäßer Weise im Halteelement 10 eingesetzt, wie die nachfolgende Beschreibung erkennen lässt.

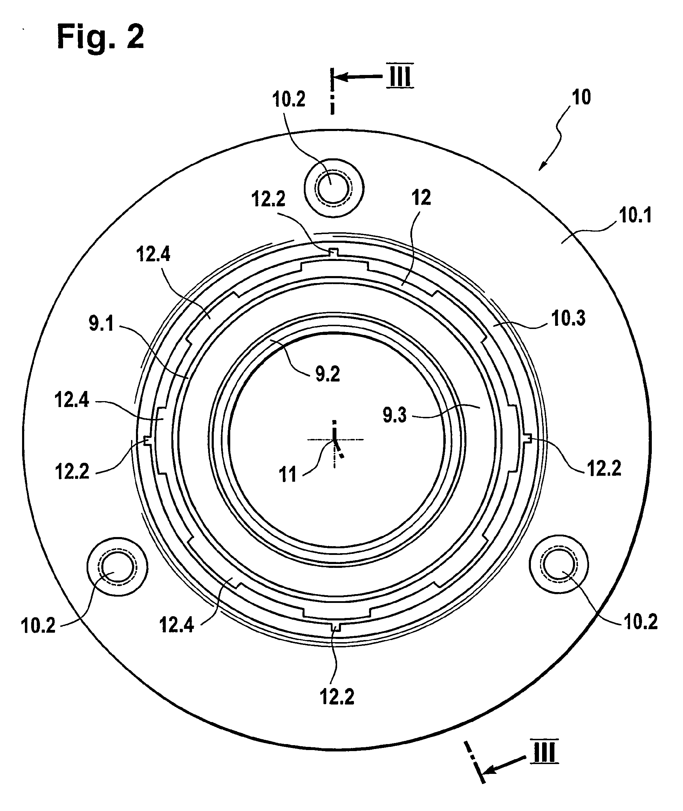

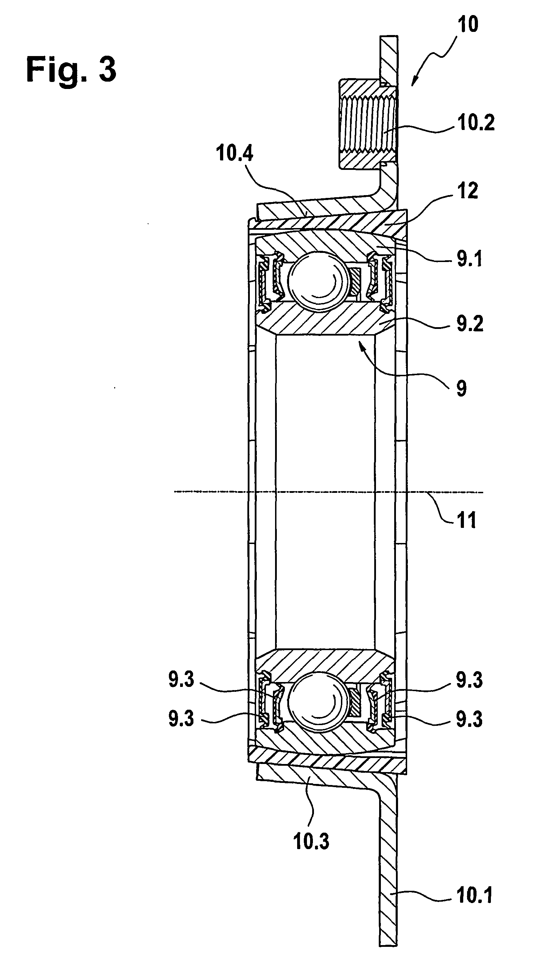

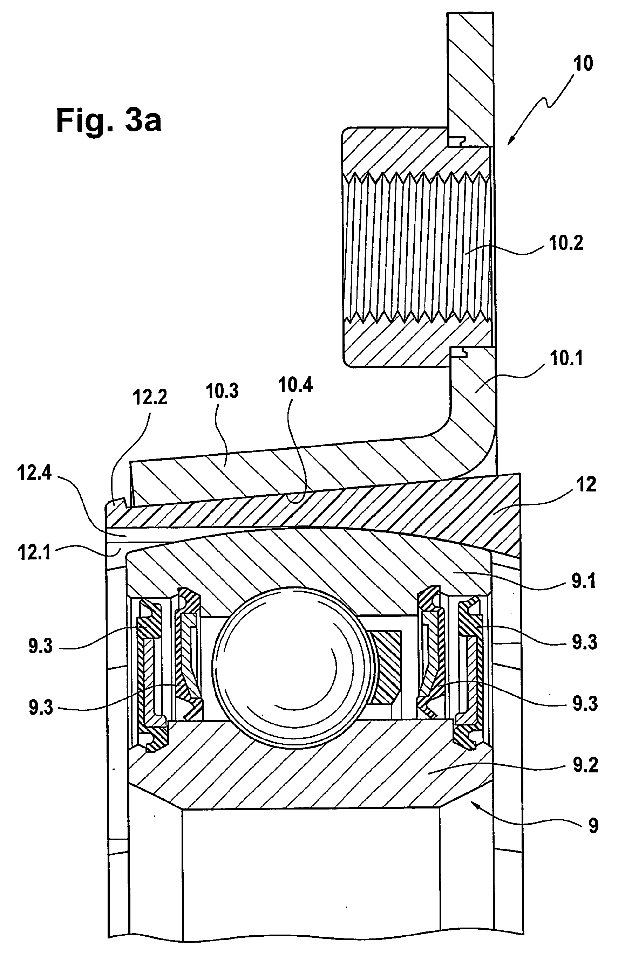

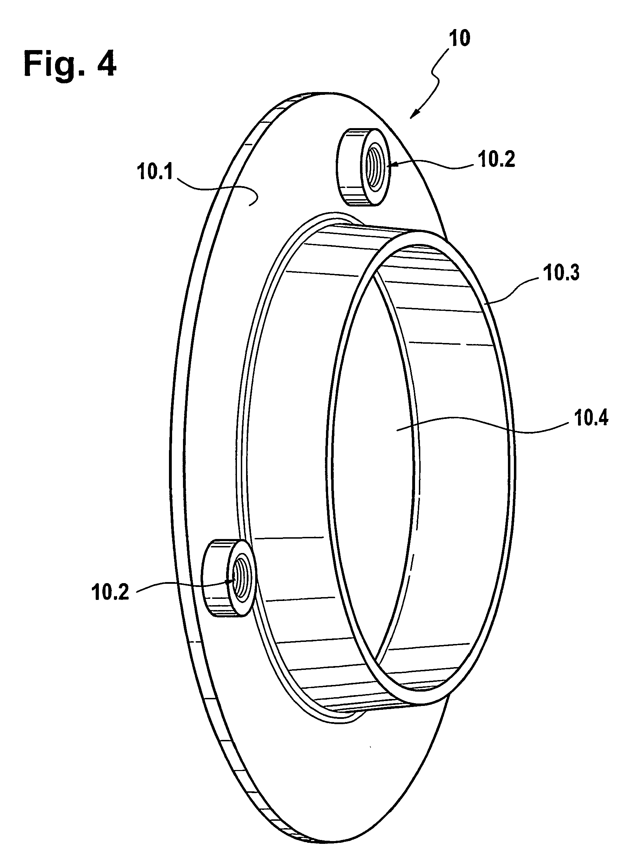

Wie insbesondere aus den Figuren 2, 3, 3a und 4 ersichtlich, ist das Halteelement 10 flanschartig derart gestaltet, dass ein senkrecht zu einer Lagerachse 11 verlaufender Teil 10.1 mit Befestigungsbohrungen 10.2 zur Aufnahme von Befestigungsschrauben versehen ist. Im Ausführungsbeispiel sind diese Befestigungsbohrungen 10.2 in einem Abstand von je 120° auf dem senkrecht zur Lagerachse 11 verlaufenden Teil 10.1 des Halteelementes 10 angeordnet. Das Halteelement 10 hat einen unter einem spitzen Winkel zur Lagerachse 11 verlaufenden Teil 10.3, dessen Aufnahmebohrung 10.4 konisch verlaufend ausgebildet ist, das heißt, in ihrem Durchmesser in axialer Richtung abnimmt. Zur erfindungsgemäßen Lageranordnung gehört weiter eine elastische Hülse 12 aus einem Kunststoff, die zwischen dem Radiallager 9 und dem Halteelement 10 angeordnet ist. Die Hülse 12 ist mit einer Aufnahmebohrung 12.1 versehen, die eine sphärische Gestalt aufweist, die zur Mantelfläche des Lageraußenringes 9.1 des Radiallagers 9 paßt, wobei die Mantelfläche des Lageraußenringes 9.1 konvex und die Aufnahmebohrung 12.1 konkar ist. Die Mantelfläche der elastischen Hülse 12 ist dem Teil 10.3 des Halteelementes 10 angepaßt, das heißt, sie nimmt in axialer Richtung gesehen von rechts nach links in ihrem Außendurchmesser ab, ist also kegelförmig bzw. konisch gestaltet. An ihrem linksseitigen Ende ist die elastische Hülse 12 mit radial nach außen weisenden Haltenasen 12.2 versehen, die das Halteelement 10, genauer gesagt dessen Teil 10.3, radial überdecken. Das Radiallager 9 enthält neben dem bereits erwähnten Lageraußenring 9.1 noch einen zugehörigen Lagerinnenring 9.2 und ist nach außen beidseitig durch doppelte Dichtungen 9.3 abgedichtet.

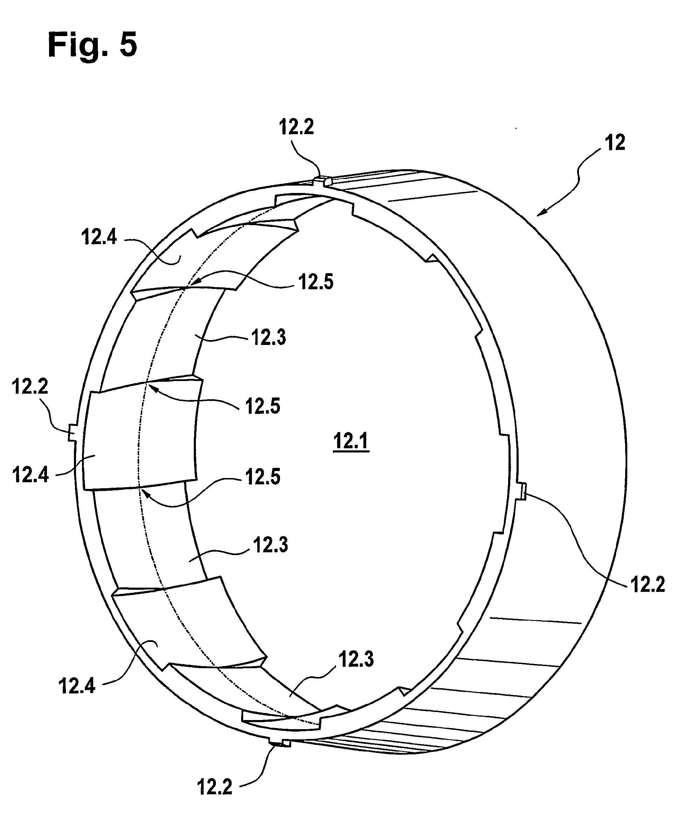

Wie die Figuren 2, 3a und 5 zeigen, ist die Aufnahmebohrung 12. 1 der elastischen Hülse 12 mit Ausnehmungen 12.3, 12.4 versehen, die sich jeweils bis in die axiale Mitte der Hülse 12 erstrecken. Die Ausnehmungen 12.3 verlaufen in der elastischen Hülse 12 in axialer Richtung gesehen von rechts nach links, während die Ausnehmungen 12.4 von links nach rechts verlaufen. Dabei sind beide Ausnehmungen 12.3,12.4 in Umfangsrichtung gleichmäßig voneinander beabstandet, wobei sie sich in der Mitte der elastischen Hülse 12 im jeweiligen Punkt 12.5 treffen.

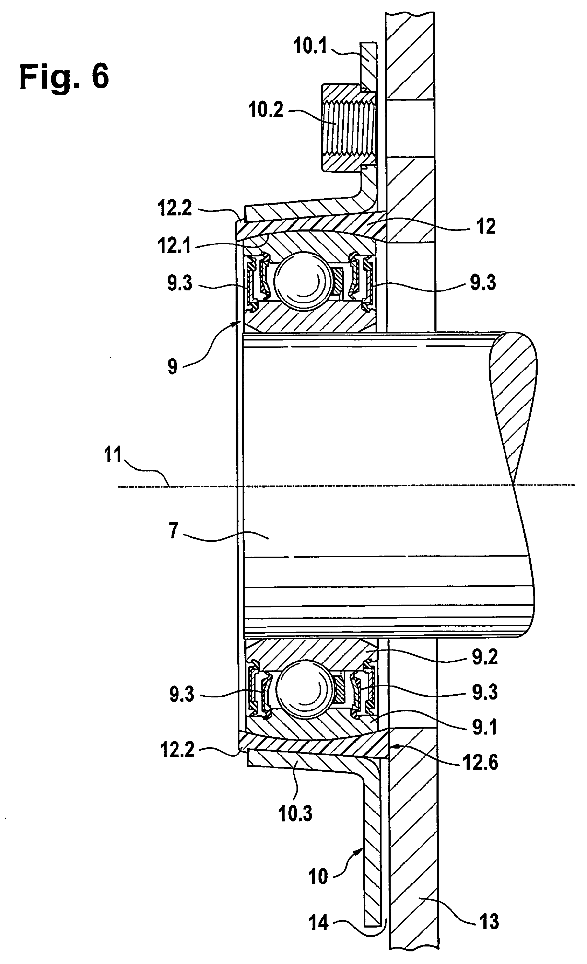

Unter Bezugnahme auf Figur 6 wird nachstehend die an sich bekannte Funktion der Selbstausrichtung des Radiallagers 9 erläutert. Im zeichnerisch dargestellten Zustand ist die im Radiallager 9 aufgenommene Welle 7 unter einem Winkel verschwenkbar, da der Lageraußenring 9.1 mit seiner konvexen Mantelfläche in der konkaven Aufnahmebohrung 12.1 der Kunststoffhülse 12 gehalten ist. Das Verschwenken der Welle 7 um einen bestimmten Winkelbetrag wird ermöglicht, da zwischen dem Halteelement 10 und einer Anschlusskonstruktion 13 noch ein Radialspalt 14 gebildet ist. Dieser Radialspalt 14 sorgt dafür, dass das freie Pendeln des Lageraußenringes 9.1 in der Kunststoffhülse 12 noch möglich ist und demzufolge die Welle 7 ausgerichtet werden kann. Wird nun von Seiten der Anschlusskonstruktion 13 in die Befestigungsbohrung 10.2 des Halteelementes 10 eine nicht dargestellte Schraube eingeführt und diese angezogen, so wird sich nach und nach der Radialspalt 14 in seiner axialen Ausdehnung verringern, bis er schließlich ganz verschwunden ist, wobei das Halteelement 10 mit seinem radial verlaufenden Teil 10.1 und die elastische Hülse 12 mit ihrer Anlagefläche 12.6 in einer Ebene an der Anschlusskonstruktion 13 anliegen. Dabei wird die elastische Hülse 12 durch das Eindrehen der Befestigungsschraube von rechts nach links weiter in das Halteelement 10 hinein geschoben, wobei gleichzeitig der radiale Druck auf die Hülse 12 bzw. das Radialkugellager 9 erhöht wird. Wenn der Radialspalt 14 zwischen Halteelement 10 und Anschlußkonstruktion 13 den Wert Null angenommen hat, ist der über das Halteelement 10 und die elastische Hülse 12 auf das Radiallager 9 ausgeübte Radialdruck so groß, dass der Lageraußenring 9.1 fest arretiert ist. Dies erklärt sich dadurch, dass die Hülse 12 mit ihrem rechtsseitig großen Durchmesser nach und nach in das Teil 10.3 des Halteelementes 10 hineingepreßt wird, das im Durchmesser in axialer Richtung abnimmt, wobei sich der Radialdruck mit fortschreitender Verschiebung der elastischen Hülse 12 erhöht. Seinen maximalen Wert nimmt er dann an, wenn die Hülse 12 mit ihrer Anlagefläche 12.6 und der radial verlaufende Teil 10.1 des Halteelements 10 gemeinsam in einer Ebene an der Anschlusskonstruktion 13 anliegen.

### Bezugszeichen

- 1: Brennkraftmaschine
- 2: Getriebe
- 3: Kardanwelle
- 4: Kardanwelle
- 5: Vorderrad
- 6: Vorderrad
- 7: Antriebshalbwelle
- 8: Kardangelenk
- 9: Radiallager
- 9.1: Lageraußenring
- 9.2: Lagerinnenring
- 9.3: Dichtung
- 10: Halteelement
- 10.1: radial verlaufendes Teil
- 10.2: Befestigungsbohrung
- 10.3: Teil
- 10.4: Aufnahmebohrung
- 11: Lagerachse
- 12: elastische Kunststoffhülse
- 12.1: Aufnahmebohrung
- 12.2: Haltenase
- 12.3: Ausnehmung
- 12.4: Ausnehmung
- 12.5: Punkt
- 12.6: Anlagefläche
- 13: Anschlußkonstruktion
- 14: Radialspalt

## Patentansprüche

1. Radiallagerung für eine Antriebswelle von Fahrzeugen, *mit einem Halteelement (10),* das an einem Gehäuse befestigt ist, mit einem abgedichteten Radiallager (9) *und mit einer elastischen Kunsfstoffhülse (12)*, *die zwischen dem Radiallager und dem Halteelement (10) angeordnet ist,* wobei *ein Außenring (9.1) des Radiallagers (9)* zur Selbstausrichtung des Radiallagers (9) *(9.1)* eine sphärisch gestaltete Mantelfläche aufweist, *und die Kunststoffhülse (10) eine* Aufnahmebohrung (12.1) *mit* eine*r* korrespondierende*n*, entgegengesetzt zur Mantelfläche des Außenringes (9.1) ausgebildete*n* sphärische*n* Gestalt aufweist und *wobei* eine Mantelfläche der Kunststoffhülse (12) konisch ausgebildet ist, die von einer korrespondierenden, ebenfalls konisch ausgebildeten Aufnahmebohrung (10.4) des Halteelements (10) aufgenommen ist, ***dadurch gekennzeichnet*, dass** *die Aufnahmebohrung (12.1) der Kunststoffhülse (12) mit mehreren gleichmäßig in Umfangsrichtung voneinander beabstandeten Ausnehmungen (12.3, 12.4) versehen ist, die sich bis in deren axiale Mitte erstrecken, wobei einander benachbarte Ausnehmungen (72.3, 72.4) ihren Ursprung wechselweise von einem der beiden axialen Enden nehmen.*

2. Radiallagerung nach Anspruch 1, **dadurch gekennzeichnet, dass** das Halteelement (10) als ein Flansch ausgebildet ist, dessen senkrecht zu einer Achse (11) des Radiallagers (9) verlaufender Radialteil (10.1) mit Befestigungsmitteln (10.2) versehen ist.

3. Radiallagerung nach Anspruch 1, **dadurch gekennzeichnet, dass** die Kunststoffhülse (12) an einem axialen Ende mit mehreren gleichmäßig in Umfangsrichtung voneinander beabstandeten Haltenasen (12.2) versehen ist, die das Halteelement (10) radial überdecken.

## Claims

1. Radial bearing arrangement for a driveshaft of vehicles, having a retaining element (10) which is fastened to a housing, having a sealed radial bearing (9) and having an elastic plastic sleeve (12) which is arranged between the radial bearing and the retaining element (10), wherein, for self-alignment of the radial bearing (9), an outer ring (9.1) of the radial bearing (9) has a spherically designed lateral surface, and the plastic sleeve (12) has a receiving bore (12.1) with a corresponding spherical design formed oppositely to the lateral surface of the outer ring (9.1), and wherein a lateral surface of the plastic sleeve (12) is of conical design, which lateral surface is received by a corresponding, likewise conically designed receiving bore (10.4) of the retaining element (10), **characterized in that** the receiving bore (12.1) of the plastic sleeve (12) is provided with a plurality of recesses (12.3, 12.4) spaced apart from one another uniformly in the circumferential direction, which recesses extend into the axial centre of said receiving bore, wherein recesses (12.3, 12.4) which are adjacent to one another originate in an alternating fashion at one of the two axial ends.

2. Radial bearing arrangement according to Claim 1, **characterized in that** the retaining element (10) is formed as a flange whose radial part (10.1) which runs parallel to an axis (11) of the radial bearing (9) is provided with fastening means (10.2).

3. Radial bearing according to Claim 1, **characterized in that** the plastic sleeve (12) is provided, at one axial end, with a plurality of retaining lugs (12.2) which are spaced apart from one another uniformly in the circumferential direction and which radially overlap the retaining element (10).

## Revendications

1. Support sur palier radial pour un arbre d'entraînement de véhicule, comprenant un élément de retenue (10) qui est fixé sur un boîtier, un palier radial (9) étanchéifié et une douille élastique en plastique (12) qui est disposée entre le palier radial et l'élément de retenue (10), une bague extérieure (9.1) du palier radial (9) présentant une surface d'enveloppe de forme sphérique pour l'auto-alignement du palier radial (9), et la douille en plastique (12) présentant un alésage de réception (12.1) avec une forme sphérique correspondante réalisée à l'opposé de la surface d'enveloppe de la bague extérieure (9.1), et une surface d'enveloppe de la douille en plastique (12) étant réalisée sous forme conique, laquelle est reçue par un alésage de réception correspondant (10.4) de l'élément de retenue (10), également de forme conique, **caractérisé en ce que** l'alésage de réception (12.1) de la douille en plastique (12) est pourvu de plusieurs évidements (12.3, 12.4) espacés uniformément les uns des autres dans la direction périphérique, qui s'étendent jusque dans son centre axial, les évidements mutuellement adjacents (12.3, 12.4) partant en alternance depuis l'une des deux extrémités axiales.

2. Support sur palier radial selon la revendication 1, **caractérisé en ce que** l'élément de retenue (10) est réalisé sous forme de bride dont la partie radiale (10.1) s'étendant perpendiculairement à un axe (11) du palier radial (9) est pourvue de moyens de fixation (10.2).

3. Support sur palier radial selon la revendication 1, **caractérisé en ce que** la douille en plastique (12) est pourvue sur une extrémité axiale de plusieurs nez de retenue (12.2) espacés uniformément les uns des autres dans la direction périphérique, qui recouvrent radialement l'élément de retenue (10).
